# EUROPEAN PATENT SPECIFICATION

(11) **EP 0 731 754 B1**
(45) Date of publication and mention of the grant of the patent: **03.03.1999**
(21) Application number: 95902187.4
(22) Date of filing: 29.11.1994
(51) Int. Cl.: B32B 23/08, B32B 27/36, C09D 167/04

(54) **BIODEGRADABLE FILM**
BIOLOGISCH ABBAUBARE FOLIE
FILM BIODEGRADABLE

(30) Priority: 30.11.1993 GB 9324512
(43) Date of publication of application: 18.09.1996
(73) Proprietor: MONSANTO COMPANY, St. Louis, Missouri 63167 (US)
(72) Inventor: KEMMISH, John, David, Lancashire PR4 OWG (GB); MONTADOR, James Henry, Billingham, Cleveland TS23 3SU (GB)
(74) Representative: Bosch, Henry
(86) International application number: GB9402609
(87) International publication number: WO9515260

(56) References cited:
- EP-A- 0 142 950
- EP-A- 0 226 439
- EP-A- 0 534 471
- EP-A- 0 603 876
- DE-A- 4 040 158
- DATABASE WPI Week 9347, Derwent Publications Ltd., London, GB; AN 93-374292 (47) & JP,A,5 278 738 (NISHIKAWA GOMU KOGYO KK) 26 October 1993
- DATABASE WPI Week 9445, Derwent Publications Ltd., London, GB; AN 94-363199 (45) & JP,A,6 286 059 (TOPPAN PRINTING CO LTD) 11 October 1994

## Description

It is desirable to provide films which are biodegradable. These films which may, for example, become contaminated with food and may be difficult to recycle by conventional means, may be composted so as to reduce their volume and to produce a useful product.

Commonly used biodegradable films comprise cellulose, especially in the form of regenerated cellulose or cellulose acetate. Such films have in general poor barrier properties to water unless the degree of substitution of the cellulose by acetate groups is high, or a layer of a barrier polymer is applied to the cellulose. In either event biodegradability suffers.

This invention, relates to biodegradable film comprising at least one layer (hereinafter referred to as the cellulose layer) comprising water swellable water insoluble cellulose or cellulose acetate and at least one layer comprising polyhydroxyalkanoate (PHA).

The invention for which protection is sought is defined in claims 1 to 10.

The PHA is suitably a polymer or copolymer of hydroxybutyric acid, for example a copolymer of (R)3-hydroxybutyric acid with (R)3-hydroxyvaleric acid. Residues of hydroxyvaleric acid may constitute 0 to 25% for example 3 to 20% of the total weight of the polymer. Suitable polymers are disclosed in European Patents 69497 and 52459.

In addition to providing a water vapour barrier, the PHA layer in general also enables the film to be heat sealed to similar sheets and to various other materials if it is a surface layer.

It is preferred that the cellulose layer should comprise regenerated cellulose or should comprise cellulose acetate with a degree of substitution of at most 2.5 and preferably at most 2.3, for example 0.2 to 2.2.

The cellulose layer may be for example 10 to 100 microns thick and the PHA layer 0.5 to 30, for example 1 to 10, microns thick.

Particular examples of the film are: a single cellulose layer and a single PHA layer; two cellulose layers with a central PHA layer, or two PHA layers and a central cellulose layer.

The film may be produced from pre-formed cellulose film, for example as sold under the trade mark "Cellophane". The PHA is to some extent amorphous; (percentage crystallinity typically 0 to 30 for solvent process material, 20-40 for virgin material) then the deposit easily adheres to other materials. If desired, a second cellulose layer may be applied and the result then preferably heated to leave a product in which the PHA layer is sandwiched between two cellulose layers.

If the PHA layer is to be on an outer surface of the film and if the film is to be rolled up soon after formation it is preferred to crystallise the PHA to the extent of typically 40-60% by heating the film, thus rendering the PHA non adhesive.

The aqueous suspensions of the PHA may be applied to the preformed cellulose film in controlled amounts by known means, for example by spreading with a Mayer bar or (preferably) by contacting the film with a gravure roll which is continuously wetted with the liquid, suitably by running a band of film over the top of a rotated gravure roll the bottom of which contacts a reservoir of the liquid.

The drying of liquids may be carried out by hot gas heating, e.g. air heating or radiant heating. Solvents other than water are preferably recovered for re-use. It is preferred to use as little solvent or water as possible in order to facilitate drying and to minimise any necessary solvent recovery.

### EXAMPLE

### Solvent Process

### (A) A first latex (A) was produced as follows:

40 mL of a 5% (w/v) solution of polyhydroxybutyric acid (PHB) in CHCl₃ is placed in a 400 mL beaker. 200 mL of 75 mM aqueous hexadecyl (cetyl) trimethylammonium bromide (CTAB) is layered carefully over the PHB solution. The contents of the beaker are then sonicated using a Dawe Soniprobe at maximum power (ca. 200 W) for 5 min using the standard (about ½ in. diameter) horn. To control CHCl₃ release into the air, the operation is carried out either in a fume cupboard or using an ice bath to control excess heating of the sample. The process is repeated until an adequate quantity of emulsion has been prepared. Once prepared the emulsion is stirred magnetically to prevent settling.

Removal of the solvent is then undertaken at the earliest opportunity as follows. 2.25 L batches of fresh emulsion are placed in 5L glass beakers, which are immersed in a 75°C recirculating water bath in a fume cupboard. Each beaker is fitted with an overhead mechanical stirrer. Foaming, which can be quite vigorous, is controllable by adjusting the stirring speed. Solvent removal is allowed to proceed for 8 hr; make-up water may be added as necessary. The final suspension should be odourless and somewhat less opaque than the original emulsion, and is stable indefinitely at room temperature. Precipitation of CTAB will gradually occur. This can be reversed by heating the suspension to 50°C.

Concentration of the particles which result is carried out by centrifugation. On a small scale, this is done conveniently by two rounds of centrifugation, at 10,000 and 40,000g, 30 min each at 20°C. The pellet from each round is resuspended immediately in the desired volume of distilled water. On a larger scale, the suspension can be centrifuged in Beckman centrifuges using the JA.10 (6 x 400 mL) rotors operated at 10,000 rpm (20°C). Under these conditions, partial collection of the particles can be effected by a 1 hr centrifugation; more complete recovery requires longer spin times (> 2hr). Latex A was made up by resuspending particles from the centrifuge in water to produce as suspension containing 21% by weight of solids. The particles are typically 24% crystalline.

### (B) A second latex, (B) comprising virgin particles, was made as follows:

Cells of Alcaligenes eutrophus were grown in batch culture in an aqueous medium on a mixture of glucose and propionic acid under phosphorus limitation to give a culture containing 160 g/l of cells containing 70% of a 3-hydroxybutyrate (HB)/3-hydroxyvalerate (HV) copolymer with a molar HV content of 4% (the remainder of the polymer being HB).

The cell suspension, which had a dry weight of 160 g/l, was rapidly heated to 150°C by direct injection of steam at 20 bar in a continuous flow steam injector. The cell suspension flowrate was controlled to give a residence time of 80 seconds at 150°C. The cell suspension was then cooled to below 70°C in a continuous flow heat exchanger.

The resulting cell suspension, now at a cell dry weight of 120 g/l due to dilution by condensed steam, was heated to 70°C and the pH raised to 8.0 by addition of NH₄OH solution and the suspension was agitated.

A solution of a proteolytic enzyme sold under the trade name L660 "Optimase", by Solvay, was then added to the cell suspension at a concentration of 0.5% w/w with respect to the cell dry weight. The pH of the suspension was maintained at 8.0 by additions of NH₄OH solution during the 2 hours of the reaction.

At the completion of the reaction, a detergent sold under the trade name "Synperonic" All by Imperial Chemical Industries PLC was added to the suspension at a concentration of 1.0% w/w with respect to the cell dry weight. The pH of the suspension was maintained at 8.0 by addition of NH₄OH solution for 2 hours. The suspension was cooled to below 40°C. The suspended phase, now mainly PHA, was washed by diluting with water and centrifugation three times. The final washed polymer suspension (latex B) had a suspended solids content of 200 g/l. The purity of the individual polymer particles, approximately 1 micron in size and 30% crystalline was typically 96% pure HBHV. The typical composition of the impurities was peptidoglycan 1%; residual protein 2%; and lipid impurities (methanol soluble 1%).

### Film Coating

Regenerated cellulose film 25µ thick sold under the tradename "Cellophane" was clamped in the sample holder so that it was taut and ripple free. A Mayer bar was placed at the top of the film and the coating material was applied by a Pasteur Pipette to the film in front of the bar. The bar was then drawn down and over the film thus coating it with the latex. The coated film in the sample holder was then placed in an oven at 80°C for 30 seconds to evaporate off the water and form a continuous coating onto the film. The PHA layer was now typically 48% crystalline.

### Results

Water vapour transmission rate was measured on 3 replicates of film per sample. Measurements were made via the 'wax-cup' method and used temperate conditions i.e. 25°C/75% Relative Humidity. Results were expressed as g/m²/day.

| Coating | Coat Weight g/m² | WVTR g/m²/day |
|---|---|---|
| None | - | 735 |
| Latex A | 2.8 | 152,337,251 Av 210 |
| Latex B | 2.1 | 142,146,152 Av 147 |

### Heat Sealability

2 Pieces of the film were held together with the coated surfaces touching and placed in between the jaws of the heat sealer. The jaws were brought down and the sample was heated for 10 s then allowed to cool for a further 10 s. The jaws were opened and the sample removed.

On inspection the cellulose film had been heat sealed successfully.

## Claims

1. A process for making biodegradable film comprising at least one layer comprising water swellable water insoluble biodegradable cellulose and/or cellulose acetate and at least one layer comprising crystalline or crystallisable microbiologically produced polyhydroxyalkanoate, said process comprising applying an aqueous suspension of at least partly amorphous particles of polyhydroxyalkanoate having no more than 40% crystallinity to preformed cellulose and/or cellulose acetate film and heating to cause the applied layer to adhere thereto.

2. A process according to claim 1 in which the polyhydroxyalkanoate is R-poly-3-hydroxybutyrate or a copolymer thereof.

3. A process according to claim 2 in which the polyhydroxyalkanoate contains up to 25, especially 3-20, mol percent of 3-hydroxyvalerate, balance 3-hydroxybutyrate.

4. A process according to any one of the preceding claims in which the cellulose and/or cellulose acetate layer has a degree of substitution up to 2.5, especially up to 2.3, preferably 0.2 to 2.2.

5. A process according to any one of the preceding claims in which the product has at least one cellulose and/or cellulose acetate layer 10-100 microns thick and at least one polyhydroxyalkanoate layer 0.5 to 30, especially 1 to 10, microns thick.

6. A process according to any one of the preceding claims in which the product has an outer layer comprising crystallised polyhydroxyalkanoate.

7. A process according to any one of the preceding claims in which the suspension as applied comprises virgin particles of 20-40% crystallinity.

8. A process according to any one of the preceding claims in which the step of heating is sufficient to crystallise the polyhydroxyalkanoate to the extent of 40-60%.

9. A process according to claim 6 including the further step of laying the polyhydroxyalkanoate sides of two product films together and heat sealing them together.

10. A process according to claim 8 in which the heating step is performed at a temperature of about 80°C.

## Patentansprüche

1. Verfahren zur Herstellung eines bioabbaubaren Films, umfassend zumindest eine Schicht, die in Wasser quellbare, wasserunlösliche bioabbaubare Cellulose und/oder Celluloseacetat umfaßt, und zumindest eine Schicht, die kristallines oder kristallisierbares mikrobiologisch hergestelltes Polyhydroxyalkanoat umfaßt, welches Verfahren das Aufbringen einer wässerigen Suspension zumindest teilweise amorpher Teilchen von Polyhydroxyalkanoat mit nicht mehr als 40 % Kristallinität auf einen vorgeformten Cellulose- und/oder Celluloseacetat-Film und Erhitzen umfaßt, um zu bewirken, daß die aufgebrachte Schicht daran haftet.

2. Verfahren nach Anspruch 1, bei welchem das Polyhydroxyalkanoat R-Poly-3-hydroxybutyrat oder ein Copolymer hievon ist.

3. Verfahren nach Anspruch 2, bei welchem das Polyhydroxyalkanoat bis zu 25, insbesondere 3 bis 20, Mol-% 3-Hydroxyvalerat, als Ausgleich 3-Hydrokybutyrat, enthält.

4. Verfahren nach einem der vorhergehenden Ansprüche, bei welchem die Cellulose- und/oder Celluloseacetat-Schicht einen Substitutionsgrad von bis zu 2,5, insbesondere bis zu 2,3, vorzugsweise 0,2 bis 2,2 aufweist.

5. Verfahren nach einem der vorhergehenden Ansprüche, bei welchem das Produkt zumindest eine 10 bis 100 µm dicke Cellulose- und/oder Celluloseacetat-Schicht und zumindest eine 0,5 bis 30, insbesondere 1 bis 10, µm dicke Polyhydroxyalkanoat-Schicht aufweist.

6. Verfahren nach einem der vorhergehenden Ansprüche, bei welchem das Produkt eine äußere Schicht aufweist, die kristallisiertes Polyhydroxyalkanoat umfaßt.

7. Verfahren nach einem der vorhergehenden Ansprüche, bei welchem die Suspension, wie aufgebracht, Jungfernteilchen mit 20 bis 40 % Kristallinität umfaßt.

8. Verfahren nach einem der vorhergehenden Ansprüche, bei welchem der Schritt des Erhitzens ausreicht, um das Polyhydroxyalkanoat in einem Ausmaß von 40 bis 60 % zu kristallisieren.

9. Verfahren nach Anspruch 6, welches ferner den Schritt des Zusammenlegens der Polyhydroxyalkanoat-Seiten der beiden Produktfilme und des Heißsiegelns derselben enthält.

10. Verfahren nach Anspruch 8, bei welchem der Erhitzungsschritt auf eine Temperatur von etwa 80°C durchgeführt wird.

## Revendications

1. Procédé pour réaliser un film biodégradable comprenant au moins une couche comprenant un acétate de cellulose et/ou une cellulose biodégradable qui gonfle dans l'eau et qui est insoluble dans l'eau et au moins une couche comprenant un polyhydroxyalcanoate cristallin ou cristallisable produit par voie microbiologique, ledit procédé comprenant une étape consistant à appliquer une suspension aqueuse de particules au moins partiellement amorphes d'un polyhydroxyalcanoate n'ayant pas une cristallinité supérieure à 40 %, sur le film préformé de cellulose et/ou d'acétate de cellulose et à chauffer pour provoquer l'adhésion de la couche appliquée au film.

2. Procédé selon la revendication 1 dans lequel le polyhydroxyalcanoate est le R-poly-3-hydroxybutyrate ou un copolymère de celui-ci.

3. Procédé selon la revendication 2, dans lequel le polyhydroxyalcanoate contient jusqu'à 25 et, plus particulièrement 3 - 20 pour-cent en moles de 3-hydroxyvalérate, le restant étant le 3-hydroxybutyrate.

4. Procédé selon l'une quelconque des revendications précédentes, dans lequel la couche de cellulose et/ou d'acétate de cellulose a un degré de substitution allant jusqu'à 2,5, en particulier jusqu'à 2,3 et, de préférence de 0,2 à 2,2.

5. Procédé selon l'une quelconque des revendications précédentes, dans lequel le produit a au moins une couche de cellulose et/ou d'acétate de cellulose de 10 - 100 microns d'épaisseur et ou moins une couche de polyhydroxyalcanoate de 0,5 à 30 et en particulier de 1 à 10 microns d'épaisseur.

6. Procédé selon l'une quelconque des revendications précédentes, dans lequel le produit a une couche externe comprenant un polyhydroxyalcanoate cristallisé.

7. Procédé selon l'une quelconque des revendications précédentes, dans lequel la suspension appliquée comprend des particules vierges ayant une cristallinité de 20 - 40 %

8. Procédé selon l'une quelconque des revendications précédentes, dans lequel l'étape de chauffage est suffisante pour cristalliser le polyhydroxyalcanoate jusqu'à 40 - 60 %.

9. Procédé selon la revendication 6, comprenant une étape additionnelle consistant à appliquer l'un contre l'autre les deux côtés de films portant le polyhydroxyalcanoate et à les thermosouder

10. Procédé selon la revendication 8, dans lequel l'étape de chauffage est effectuée à une température d'environ 80 °C
